# EUROPÄISCHE PATENTANMELDUNG

(11) **EP 1 816 598 A1**
(43) Veröffentlichungstag der Anmeldung: **08.08.2007**
(21) Anmeldenummer: 06021497.0
(22) Anmeldetag: 13.10.2006
(51) Int. Cl.: G06Q 40/00

(54) **Datenverarbeitungsverfahren zur automatischen Bereitstellung von Daten und Datenverarbeitungsvorrichtung**

(30) Priorität: 18.01.2006 US 759615 P
(71) Anmelder: UBS AG, 8001 Zürich (CH)
(72) Erfinder: Klingele, Patrick, 8136 Gattikon (CH)
(74) Vertreter: Jehle, Volker Armin

(57) **Zusammenfassung**

Es wird eine Vorrichtung und ein Datenverarbeitungsverfahren zur automatischen Bereitstellung von Daten auf Rechnern an verschiedenen Standorten vorgeschlagen, wobei die Daten Beleihungswerte und zusätzliche Datenattribute für marktfähige Wertschriften sind, mit mindestens folgenden Verfahrensschritten:
a. automatisiertes Transferieren von Marktdaten von Wertschriften auf ein zentrales Rechnersystem;
b. automatisiertes Transferieren von Markt- und Stammdaten von Wertschriften auf einen weiteren Server des zentralen Rechnersystems;
c. Ermitteln eines Beleihungswertes für jede der Wertschriften, für die Markt- und Stammdaten transferiert wurden, wobei zur Ermittlung des Beleihungswertes einer Wertschrift die auf den weiteren Server des zentralen Rechnersystems zu dieser Wertschrift transferierten Markt- und Stammdaten herangezogen werden;
d. Anzeigen des ermittelten Beleihungswertes und der dazugehörenden Markt- und Stammdaten einer Wertschrift in individuell gestalteten Anzeigefenstern;
e. Transferieren der ermittelten Beleihungswerte der Wertschriften von dem zentralen Rechnersystem auf die Rechner an den verschiedenen Standorten und von zusätzlichen Datenattributen an übrige Rechnersysteme, wobei das Transferieren voll automatisiert bzw. mittels eines "Full Download" oder eines "Shopping Liste" Verfahrens erfolgen kann.

## Beschreibung

Die Erfindung betrifft ein Datenverarbeitungsverfahren zur automatischen Bereitstellung von Daten an verschiedenen Standorten und eine Datenverarbeitungsvorrichtung dafür.

Es ist bekannt, dass Banken oder andere Finanzdienstleistungsunternehmen Kredite vergeben, wobei für einen Kredit über einen größeren Wert dem Kreditgeber ein Gegenwert zur Kreditsicherung zu bieten ist. Insbesondere bei Großbanken kann ein solcher Gegenwert beispielsweise aus Wertschriften bestehen, zum Beispiel Aktien, Fonds, Obligationen, Wandelanleihen, Edelmetallen oder anderen handelbaren Valoren. Die Wertschriften werden dazu bei der Großbank in einem Depot hinterlegt, beispielsweise in einem Aktiendepot, so dass die Großbank tatsächlich Zugriff auf die Wertschriften hat, um diese nötigenfalls verkaufen zu können.

Der Wert der zur Kreditsicherung hinterlegten Wertschriften kann jedoch veränderlich sein. So kann beispielsweise der Wert von Aktien oder Edelmetallen oder anderen handelbaren Wertschriften steigen oder fallen. Aus der Erfahrung kann man jedoch für viele Wertschriftenarten die damit verbundenen Risiken einschätzen.

Zur Ermittlung der Höhe einer maximalen Beleihung muss der Kreditgeber daher unter Berücksichtigung des jeweiligen Risikos für jede zu beleihende Wertschriftenart ermitteln, bis zu welchem Maximalbetrag er die Wertschrift als Kreditsicherung annimmt. Der Kreditgeber ermittelt also für jede Wertschrift einen Beleihungswert. Der Beleihungswert entspricht damit dem Wert einer Wertschrift, den der Kreditgeber in der Zukunft und in endlicher Zeit mit dem kalkulierten Risiko aus der Wertschrift im normalen Geschäftsverkehr realisieren kann. Für ein zur Kreditsicherung hinterlegtes Portfolio von Wertschriften kann damit unter Heranziehung der Beleihungswerte die maximale Kreditsumme berechnet werden.

Die Ermittlung eines Beleihungswertes für eine Wertschrift ist jedoch insoweit problematisch, als dass der zukünftige Wert der Wertschriften für viele Wertschriftenarten nur schwer bestimmbar ist. Insbesondere Wertschriften wie Aktien oder Hedge-Fonds können innerhalb kurzer Zeit erheblich an Wert gewinnen oder verlieren, so dass mit diesen ein hohes Risiko einhergeht. Für Wertschriften, die ein hohes Risiko eines Wertverlusts aufweisen, wird daher ein geringer Beleihungswert angesetzt. Andere Wertschriften, wie beispielsweise Obligationen, bei denen üblicherweise die Verzinsung und damit die Wertveränderung festgeschrieben ist, weisen demgegenüber in der Regel ein deutlich geringeres Risiko auf. Für diese kann somit ein höherer Beleihungswert ermittelt werden.

Nach dem Stand der Technik wird der Beleihungswert für eine Wertschrift üblicherweise von einer Person ermittelt, die ausreichend Erfahrung mit der Einschätzung von Werten der Wertschriften hat. Diese zieht zur Ermittlung der Beleihungswerte verschiedene Kriterien heran, um das Risiko der zukünftigen Wertentwicklung abschätzen zu können. Dabei werden üblicherweise nur aus der Vergangenheit und Gegenwart mit Sicherheit ableitbare Kriterien herangezogen, die auch mit einer gewissen Wahrscheinlichkeit für die Zukunft gelten.

Eine solche manuelle Ermittlung eines Beleihungswerts weist jedoch eine Reihe von Nachteilen auf. Die Analyse der Zahlen aus der Vergangenheit verursacht erheblichen Aufwand, so dass nicht alle wertbeeinflussenden Faktoren berücksichtigt werden können. Aufgrund der hohen Anzahl der verschiedenen Arten von Wertschriften erfordert es sehr hohen Aufwand, die zur Ermittlung notwendigen Daten aus der Vergangenheit für den Einzelfall anzufordern, wobei fraglich ist, ob diese überhaupt in ausreichender Menge für die Vergangenheit beschafft werden können. Für viele insbesondere schnelllebige Wertschriften wird es in hohem Maße auf die subjektive Beurteilung durch die jeweils beurteilende Person ankommen.

Ein weiterer Nachteil einer manuellen Ermittlung ergibt sich daraus, dass insbesondere große Banken eine Vielzahl von Niederlassungen in unterschiedlichen Ländern der Welt betreiben. Es liegt jedoch gerade im Interesse solcher Großbanken, dass derartige Geschäfte mit Wertschriften in den einzelnen Niederlassungen möglichst gleich, objektiv und kalkulierbar behandelt werden, um gegenüber den Bankkunden objektiv und verlässlich auftreten und diesen ein sowohl attraktives als auch transparentes und nachvollziehbares Geschäft anbieten zu können. Weiterhin liegt es im natürlichen Interesse eines Kreditgebers, die hinterlegten Kreditsicherungswerte möglichst objektiv und realistisch beurteilen zu können, um so das eigene mit dem Kreditgeschäft verbundene Risiko objektiv kalkulieren zu können und gering zu halten.

Eine (Haupt-)Aufgabe der Erfindung besteht damit darin, eine Vorrichtung und ein Verfahren zur automatischen Bereitstellung von konsistenten Beleihungswerten von Wertschriften an verschiedenen Standorten vorzuschlagen, die als Grundlage für die Ermittlung des sich insgesamt ergebenden Gesamtbeleihungswertes eines Portfolios eines Kreditnehmers dienen können, welcher der maximalen Höhe einer Kreditaufnahme unter Heranziehung des Portfolios zur Kreditsicherung entspricht.

Zur Lösung der o.g. bzw. weiterer Aufgaben wird eine Vorrichtung und ein Datenverarbeitungsverfahren zur automatischen Bereitstellung von Beleihungswert-Daten auf Rechnern an verschiedenen Standorten gemäß den Gegenständen der Ansprüche 1 und 19 vorgeschlagen. Vorteilhafte Weiterbildungen der Erfindung sind in den Unteransprüchen angegeben.

Gemäß einer vorteilhaften Ausgestaltung der Erfindung kann das Verfahren prinzipiell z.B. die folgenden Schritte aufweisen:
A. Ändern von Steuerungsvariabeln von - zur Ermittlung von Beleihungswerten verwendeten - Rechenmodellen, bzw. von in den Rechenmodellen verwendeten Ausschlusskriterien, unter Verwendung entsprechender Steuerungstabellen, sofern nötig und angebracht, bevor jeder der im folgenden angeführten Schritte B bis H ausgeführt wird;
B. automatisiertes Transferieren von Marktdaten von einem Marktdatenserver eines Datenzulieferers auf den Marktdatenserver eines zentralen Rechnersystems, sowie Verarbeiten und Bereitstellen der Marktdaten (bzw. entsprechend weiterverarbeiteter bzw. vorverarbeiteter (Markt-)Daten) für Schritt C, und Speichern sämtlicher Daten auf der Datenbank des Marktdatenservers / des zentralen Rechnersystems;
C. automatisiertes Transferieren von Stamm- und Marktdaten von Wertschriften vom Valorenstamm-Server bzw. vom Marktdatenserver auf einen weiteren Server des zentralen Rechnersystems;
D. Durchführen eines "Valmergeprozesses" (s.u.);
E. Ermitteln eines Beleihungswertes für jede der Wertschriften, für die Stamm- und Marktdaten transferiert wurden, durch den weiteren Server, wobei zur Ermittlung des Beleihungswertes einer Wertschrift ein für die jeweilige Wertschriftenart gespeichertes Rechenmodell und die auf den weiteren Server des zentralen Rechnersystems zu dieser Wertschrift transferierten Stamm- und Marktdaten herangezogen werden;
F. Historisieren (Speichern) des ermittelten Beleihungswertes und der dazugehörenden Stamm- und Marktdaten einer Wertschrift auf einer (weiteren) Datenbank des zentralen Rechnersystems;
G. Anzeigen des ermittelten Beleihungswertes und der dazugehörenden Stamm- und Marktdaten einer Wertschrift in individuell nach Wertschriftart gestalteten Anzeigefenstern;
H. Transferieren der ermittelten Beleihungswerte der Wertschriften von dem zentralen Rechnersystem auf die Rechner an den verschiedenen Standorten sowie Transferieren der ermittelten Beleihungswerte und von zusätzlichen Datenattributen an übrige Rechnersysteme.

In dem ersten Verfahrensschritt (Schritt A) werden die Variabeln der Rechenmodelle bzw. der Ausschlusskriterien in den entsprechend zur Verfügung stehenden Steuerungstabellen angepasst. Dieses Verfahren wird manuell vorgenommen und ist sehr vorteilhaft, da der Betreiber des zentralen Rechnersystems, z.B. eine Grossbank zu jeder Zeit in der Lage ist, die jeweils verwendeten Modelle und/oder den "Risikoappetit" an Änderungen der Rahmenbedingungen des Marktes, Änderungen des Standes der Methodik, etc. anzupassen.

In dem zweiten Verfahrensschritt (Schritt B) werden die Marktdaten von einem externen Marktdatenserver eines Marktdatenzulieferers - z.B. der Fa. Bloomberg - abgeholt und auf einen Marktdatenserver eines zentralen Rechnersystems geladen (z.B. auf automatisierte Weise zu jeweils vorbestimmten Zeitpunkten, z.B. einmal täglich). Diese Daten beinhalten - im Idealfall - für jede marktfähige Wertschrift u.a. die Preise, zu denen die Wertschrift an ihren Handelsplätzen gehandelt wurde, sowie z.B. die Tageshandelsvolumen, welche für eine Wertschrift an Ihren Handelsplätzen erwirtschaftet wurden, das Preisdatum (z.B. Tag und/oder Uhrzeit), etc. Die Handelsplätze können dabei Aktienbörsen oder diejenigen Handelsplätze sein, an denen relevante Marktdaten für eine Wertschrift erzeugt werden. Da diese Daten in Rohform vorliegen, können sie noch weiterverarbeitet werden, damit sie für den nächsten Verfahrenschritt (Schritt C) bereitstehen.

In der Verarbeitung werden zum Beispiel die Rohdaten um durch Corporate Actions Ereignisse, z.B. Stock Splits hervorgerufene Einflüsse auf den Preis und/oder das Tageshandelsvolumen einer Wertschrift, bereinigt. Die jeweiligen Corporate Actions Ereignisse kennzeichnende Daten können z.B. ebenfalls vom o.g. Marktdatenzulieferer-Marktdatenserver an den Marktdatenserver des zentralen Rechnersystems gemeldet werden. Auf diese Weise können durch den Marktdatenserver durch Corporate Actions Ereignisse, z.B. Stock Splits hervorgerufene Einflüsse auf Preis (X₀) und/oder Tageshandelsvolumen automatisch korrigiert werden, so dass durch den Marktdatenserver nach einem Stock Split von z.B. 1:2 (Austausch einer alten gegen zwei neuen Aktien) sämtliche vom Marktdatenzulieferer-Marktdatenserver historisch gelieferte Wertschriften-Preise vor dem Stock Split (historische Zeitreihen) von z.B. X₋₁, (Preis am Tag vor dem Split) in einen korrigierten bzw. bereinigten Preis X_{-1'}=X₋₁/2, bzw. von z.B. X₋₂ (Preis 2 Tage vor dem Split) in einen korrigierten bzw. bereinigten Preis X_{-2'} = X₋₂/2, etc., etc. umgerechnet werden (oder so dass z.B. bei einem Stock Split von 1:4 (Austausch einer alten gegen vier neuen Aktien) sämtliche vom Marktdatenzulieferer-Marktdatenserver historisch gelieferte Wertschriften-Preise vor dem Stock Split (historische Zeitreihen) von z.B. X₋₁, in einen korrigierten bzw. bereinigten Preis X_{-1'}=X₋₁/4, bzw. von X₋₂ in einen korrigierten bzw. bereinigten Preis X_{-2'} = X₋₂/4 umgerechnet werden, etc. etc.). Nachdem dieser Schritt abgeschlossen ist, werden verschiedene Kenngrößen für eine jeweilige Wertschrift errechnet, wie u.a. die Volatilität des Preises, bzw. der Preisrenditen, der Wertschrift und deren durchschnittliches Tageshandelsvolumen. Dabei werden Zeitreihen mit den Preisen und dem Tageshandelvolumen der Wertschrift über eine vorbestimmte Zeitperiode bzw. einen vorbestimmten Zeitraum, z.B. eine vorbestimmte Anzahl an Handelstagen gebildet und herangezogen. Die Länge der für die Berechnung der Volatilität und/oder des durchschnittliches Tageshandelsvolumens in Betracht gezogenen Zeitperiode / die Anzahl der in Betracht gezogenen Handelstage (z.B. die letzten 30 Tage, die letzten 60 Tage, etc., etc.) ist variabel einstellbar, z.B. über entsprechende Steuerungsvariable/Steuerungstabellen. Sämtliche Daten - in Rohform, sowie verarbeitet oder errechnet (z.B. auch die o.g. Daten betreffend Volatilität / durchschnittliches Tageshandelsvolumen, etc.) - werden auf der Datenbank des Marktdatenservers des zentralen Rechnersystems gespeichert.

Bei bestimmten z.B. vom o.g. Marktdatenzulieferer-Marktdatenserver gelieferten Corporate Actions Ereignisse kennzeichnenden Daten (z.B. bei Daten, die eine Dekotierung einer Aktie anzeigen, etc.) kann durch den Marktdatenserver des zentralen Rechnersystems z.B. der o.g. Wert für das durchschnittliche Tageshandelsvolumen für die jeweilige Wertschrift automatisch auf "0" gesetzt werden.

Entsprechend ähnlich kann bei bestimmten weiteren z.B. vom o.g. Marktdatenzulieferer-Marktdatenserver gelieferten Corporate Actions Ereignisse kennzeichnenden Daten (z.B. bei Daten, die eine Konkursanmeldung eines Unternehmens anzeigen, etc.) durch den Marktdatenserver des zentralen Rechnersystems z.B. der Volatilitätswert für die jeweilige Wertschrift automatisch auf "0" gesetzt werden.

Auf ähnliche Weise kann z.B. dann, falls für eine bestimmte Wertschrift zu wenige Preise zur Bildung eines eine entsprechend hohe Genauigkeit aufweisenden Volatilitätswerts zur Verfügung stehen - z.B., falls die Anzahl der für die o.g., in Betracht gezogene Zeitperiode zur Verfügung stehenden Preise einen vorbestimmten, variabel einstellbaren Wert unterschreitet - durch den Marktdatenserver der Volatilitätswert für die jeweilige Wertschrift ebenfalls automatisch auf "0" gesetzt werden.

Bei der später durch den o.g. weiteren Server durchgeführten Beleihungswert-Ermittlung für eine Wertschrift führt ein einer Wertschrift zugeordneter Volatilitätswert von "0", oder ein einer Wertschrift zugeordneter Wert für das durchschnittliche Tageshandelsvolumen von "0" jeweils automatisch zu einem Beleihungswert "0".

In dem dritten Verfahrensschritt (Schritt C) werden die Stamm- und Marktdaten von Wertschriften automatisiert auf den o.g. weiteren Server geladen. Die übertragenen Daten beinhalten somit- im Idealfall - für jede marktfähige Wertschrift entsprechende Kenn- und Grunddaten (Preise), sowie die (Markt-)Daten, welche gemäss Verfahrenschritt B bereitgestellt wurden (z.B. die o.g. entsprechend weiterverarbeiteten bzw. vorverarbeiteten (Markt-)Daten, z.B. die o.g. Daten betreffend Volatilität /durchschnittliches Tageshandelsvolumen, etc.).

Das Transferieren der Stamm- und Marktdaten findet automatisiert statt und muss somit nicht manuell angestoßen werden. Beispielsweise kann der Transfer der Daten immer zur gleichen Tageszeit angestoßen werden, beispielsweise durch einen sogenannten Scheduler- oder Cron-Prozess auf dem (weiteren) Server. Auf dem (weiteren) Server werden die Marktdaten zur weiteren Verarbeitung entsprechend abgelegt.

Zusätzlich zum o.g. Markdatenserver kann der weitere Server für einzelne der o.g. Wertschriften, und/oder für weitere, zusätzliche Wertschriften noch entsprechende (weitere) Stamm- und Marktdaten, und/oder (weitere) z.B. den Preis, den Hauptbörsenplatz, die Ratings einer Wertschrift betreffende Daten von einem oder mehreren zusätzlichen Rechnern erhalten, z.B. von einem von der Fa. Telekurs mit entsprechenden Daten belieferten zusätzlichen Rechner, und/oder z.B. von einem weiteren, zusätzlichen, bank-internen Rechner (z.B. von einem Rechner einer Auslandstochter der Großbank, welcher z.B. Bonds betreffende Preisdaten, und Rating-Daten, etc. liefern kann), usw.

Vorteilhaft können diese Daten von der jeweiligen Quelle - z.B. Telekurs - bereits in der jeweils gewünschten - weiterverarbeiteten bzw. vorverarbeiteten - Form geliefert werden, sodass sich für diese Daten die Durchführung von dem Schritt B entsprechenden Daten-Weiterverarbeitungs- bzw. -Vorverarbeitungsschritten erübrigen kann.

Im vierten Verfahrenschritt (Schritt D)- "Valmergeprozess" - werden die o.g. ggf. aus verschiedenen Quellen (z.B. dem o.g. Marktdatenserver, den o.g. zusätzlichen Rechnern, etc.) stammenden Daten durch den o.g. weiteren Server so verarbeitet, dass für jede Wertschrift jeweils ein einziger, dieser zugeordneter, in der entsprechenden Datenbank abgespeicherter Datensatz erzeugt wird, z.B. mit jeweils einem einzigen, eindeutigen, der Wertschrift zugeordneten Volatilitätswert, mit einem einzigen, eindeutigen, der Wertschrift zugeordneten Wert für das durchschnittliche Tageshandelsvolumen, mit jeweils eindeutigen Wertschrift-Preiswerten, etc., etc.

Der Valmergeprozess wird erst dann angestoßen, wenn der weitere Server von sämtlichen der o.g. Quellen die jeweils entsprechende Daten-Lieferung vollständig erhalten hat.

Im Rahmen des Valmergeprozesses wird zunächst ermittelt, welche der von den verschiedenen Quellen gelieferten Daten jeweils identische Wertschriften betrifft. Dabei können jeweils identische Wertschriften je nach Quelle durch jeweils unterschiedliche Stammdaten gekennzeichnet sein, z.B. bei einer ersten Quelle jeweils durch die ISIN-Nr., und bei einer zweiten Quelle jeweils durch die Valoren-Nr., etc. Zur Ermittlung, welche der von den verschiedenen Quellen gelieferten Daten jeweils identische Wertschriften betrifft, kann der weitere Server z.B. eine oder mehrere entsprechende, die Zuordnung zwischen verschiedenen Stammdaten kennzeichnende Tabelle, z.B. eine ISIN-Nr.-Valoren-Nr.-Referenztabelle verwenden.

Wird ermittelt, dass für ein-und-dieselbe Wertschrift konkurrierende Daten aus verschiedenen Quellen vorhanden sind (z.B. konkurrierende Preis-Daten, konkurrierende Rating-Daten, etc.), werden mittels entsprechender Priorisierungsverfahren jeweils diejenigen Daten ausgewählt, die für die Abspeicherung des o.g. einer jeweiligen Wertschrift zugeordneten Datensatzes in der Datenbank verwendet werden sollen.

Je nach Wertschriftenart, etc. können jeweils unterschiedliche Priorisierungsverfahren verwendet werden.

Beispielsweise können bei Obligationen jeweils die Daten derjenigen Quelle priorisiert, und für die Abspeicherung im o.g. Datensatz ausgewählt werden, die das jüngste Preisdatum aufweisen, d.h., am aktuellsten sind.

Bei für verschiedene Quellen - z.B. den o.g. Markdatenserver (Bloomberg), und den o.g. zusätzlichen Rechner (Telekurs), etc. - identischem Preisdatum können die Daten einer bestimmten, vorab festgelegten Quelle Default-mäßig für die Abspeicherung im o.g. Datensatz ausgewählt werden, z.B. die Daten von z.B. Bloomberg.

Für andere Arten von Daten - z.B. Rating-Daten - kann z.B. allein eine Priorisierung nach der Quelle vorgenommen werden. Beispielsweise können durch den weiteren Server jeweils die Rating-Daten von Bloomberg bevorzugt für die Abspeicherung im o.g. Datensatz verwendet werden; lediglich dann, wenn keine Daten von Bloomberg vorhanden sind, kann auf von einer anderen Quelle stammende Rating-Daten zurückgegriffen werden, z.B. auf Rating-Daten von Telekurs.

Im fünften Verfahrensschritt (Schritt E) wird zu jeder Wertschrift, zu dem Stamm- und Marktdaten auf den weiteren Server transferiert werden konnten - auf Basis der beim Valmergeprozess erzeugten Datensätze - ein Beleihungswert ermittelt. Dabei wird für jede Wertschrift ein für die Art der jeweiligen Wertschrift in dem weiteren Server des zentralen Rechnersystems gespeichertes Rechenmodell zusammen mit den auf den weiteren Server transferierten Marktdaten zur Ermittlung des Beleihungswertes herangezogen.

Damit wird für jede Wertschrift, deren Kenndaten in dem weiterem Server des zentralen Rechnersystems hinterlegt sind und zu dem Stamm- und Marktdaten auf den weiteren Server geladen werden könnten, ein Beleihungswert ermittelt.

Im sechsten Verfahrenschritt (Schritt F) werden die ermittelten Beleihungswerte sowie die dazugehörenden Stamm- und Marktdaten für jede Wertschrift auf der (weiteren) Datenbank des zentralen Rechnersystems gespeichert. Dabei wird eine Historie mit den aktuellsten und den in der Vergangenheit liegenden Daten über eine maximale vorbestimmte Zeitperiode gebildet. Alle Daten, die ferner als diese Zeitperiode (z.B. 2 Jahre) zurückliegen, werden als obsolet betrachtet und deshalb auf der Datenbank gelöscht.

Im siebten Verfahrenschritt (Schritt G) können - bei Bedarf - die ermittelten Beleihungswerte sowie dazugehörende Stamm- und Marktdaten für jede Wertschrift auf einer Benützeroberfläche (Global User Interface - GUI) angezeigt werden. Dabei werden sowohl die aktuellsten sowie die historisierten Daten angezeigt. Die angezeigten Daten umfassen sämtliche für die Beleihungswertberechnung einer Wertschrift relevanten Daten; diese werden in einem je nach Wertschriftenart (zum Beispiel Aktien, Fonds, Obligationen, Wandelanleihen, Edelmetalle, etc.) individuell bzw. anders gestalteten Ansichtsfenster (View) angezeigt, damit nur die zur Wertschriftart passenden Informationen angezeigt werden.

Anschließend werden - im achten Verfahrensschritt (Schritt H) - die Beleihungswerte aller Wertschriften von dem zentralen Rechnersystem (insbesondere dem o.g. weiteren Server) auf die Rechner an den verschiedenen Standorten transferiert (bzw. beispielsweise auch an den o.g. Rechner der Auslandstochter der Großbank). Die Standorte erhalten damit die auf den aktuellen Marktdaten basierenden Beleihungswerte der Wertschriften. Zur Übertragung der Beleihungswerte kann eine entsprechende Kodierung verwendet werden; der jeweils ermittelte Beleihungswert wird auf einen diesem zugeordneten Codewert "gemappt" (z.B. ein Beleihungswert von 40% (d.h. ein Haircut von 60% (100% - Beleihungswert [%])) z.B. auf einen Codewert "1060" ("1000" + Haircut [%]), etc., etc.).

Zudem können die ermittelten Beleihungswerte und zusätzliche Datenattribute (z.B. die Marktkapitalisierung von Unternehmen kennzeichnende Daten, das durchschnittliche Tageshandelsvolumen einer Wertschrift kennzeichnende Daten, etc.) an ein oder mehrere übrige Rechnersysteme transferiert werden. Die Rechnersysteme können z.B. zur Quantifikation von Risiken für die Grossbank verwendet werden. Beispielsweise können mit einem ersten übrigen Rechnersystem Kundenportfoliosimulationen durchgeführt werden (z.B. entsprechende Kapitalmarkt-Stresssituations- (Marktschocks-) Simulationen (z.B. um zu Simulieren, welche Auswirkungen ein Markschock - Konkurs eines Grossunternehmens, Zahlungsunfähigkeit eines Schwellenlands, etc., etc. - auf das Portfolio eines Kunden hat)), bzw. entsprechende Kunden-Klumpenrisiko-Identifikationsverfahren. Des weiteren können mit einem zweiten übrigen Rechnersystem entsprechende Kenn- bzw. Risikogrößen errechnet werden, z.B. sog. "expected loss"-Daten, die zur Umsetzung entsprechender regulatorischer Rahmenbedingungen, z.B. Basel II verwendet werden können (z.B. zur Ermittlung des entsprechenden Basel II-konformen regulatorischen Kapitals für die Großbank), oder Kenn- bzw. Risikogrößen zur risikoadäquaten Belastung einer Kunden-Erfolgsrechnung, etc.

Bevor die o.g. Marktdaten auf das zentrale Rechnersystem transferiert und dort verarbeitet werden können, sind zur eindeutigen Identifizierung der Wertschriften deren Kenndaten in einem Stammdatensatz der Wertschrift in das Rechnersystem zu transferieren und zu speichern. Dabei wird ein solcher Stammdatensatz für eine Wertschrift genau dann angelegt, wenn für eine entsprechende Wertschrift an einem Standort der Großbank ein Beleihungswert zu ermitteln ist.

In vorteilhafter Weise wird das Verfahren an jedem Tag ausgeführt, an dem Wertschriften gehandelt werden und damit neue Marktdaten an den Handelsplätzen erzeugt werden und verfügbar sind. Die ermittelten Beleihungswerte der Wertschriften beruhen damit immer auch auf den Marktdaten gemäss Börsen-/Handelsschluss des Vortags, bzw. des letzten Handelstags. Für die Grossbank, die als Kreditgeberin auftritt, bedeutet dies eine erhöhte Sicherheit, da bei einer Kreditvergabe für eine Wertschrift auch die jüngsten Daten berücksichtigt sind.

Die für die einzelnen Wertschriften ermittelten Beleihungswerte sowie die dazugehörigen Stamm- und Marktdaten können zu jeder Wertschrift dauerhaft auf dem zentralen Rechnersystem gespeichert werden (z.B. über einen vorbestimmten Zeitraum, z.B. 2 Jahre), so dass diese zu jeder Wertschrift mit einer kurzen Zugriffszeit verfügbar sind. Aus den gespeicherten Werten lassen sich für die Vergangenheit verschiedene Kenngrößen ermitteln, wie beispielsweise die Volatilität einer Aktie oder deren durchschnittliches Tageshandelsvolumen über eine bestimmte Zeitperiode. Wie die Erfahrung gezeigt hat, können aus solchen Daten mit einer gewissen Wahrscheinlichkeit Aussagen für die Zukunft hergeleitet werden. Die gespeicherten Daten können damit in vorteilhafter Weise bei der Ermittlung eines aktuellen Beleihungswertes berücksichtigt werden.

Das Verfahren kann in vorteilhafter Weise für diejenigen Wertschriften, zu denen kein Beleihungswert automatisch ermittelt werden kann, vorsehen, dass ein solcher manuell eingegeben wird. Die Eingabe kann dabei nach der Durchführung des Verfahrens erfolgen. Stellt sich also nach dem Verfahrerisablauf heraus, dass beispielsweise aufgrund fehlender Marktdaten ein Wert nicht automatisch ermittelt werden konnte, so besteht damit die Möglichkeit, einen Wert manuell einzugeben.

Weiterhin kann für einige Wertschriften oder Wertschriftarten, für die ein Beleihungswert nicht über ein Rechenmodell ermittelbar ist, vorgesehen sein, dass ein Beleihungswert immer manuell einzugeben ist. Ebenso kann vorgesehen sein, dass durch eine manuelle Eingabe ein automatisch ermittelter Beleihungswert überschrieben wird. Dies kann beispielsweise dann vorteilhaft sein, wenn die vorliegenden Marktdaten einen offensichtlichen Fehler aufweisen und somit ein falscher oder gar keinen Belehnungswert ermittelt wird.

Ferner kann auch vorgesehen sein, dass Stamm- und/oder Marktdaten manuell eingegeben werden, und mit den manuell eingegeben Daten automatisch eingelesene Datenattribute überschrieben werden. Dies kann beispielweise vorteilhaft sein, wenn Stamm- und/oder Marktdaten einen offensichtlichen Fehler aufweisen und somit ein falscher oder gar keinen Belehnungswert ermittelt wird.

Die manuelle Eingabe von Beleihungswerten, sowie die manuelle Überschreibung von Stamm- und/oder Marktdaten kann vorteilhaft durch die Durchführung einer Massenmutation auf dem zentralen Rechnersystem, bzw. auf dem weiteren Server des zentralen Rechnersystems erfolgen. Dies kann sich vor allem als sehr nützlich erweisen, wenn eine große Menge von Wertschriften betroffen sind. Dabei wird eine Datei in einem vorbestimmten Format in das zentrale Rechnersystem eingelesen.

Das Verfahren kann weiterhin vorsehen, dass die Marktdaten in gesammelter Form von einem externen Marktdatenserver eines Marktdatenzulieferers auf den Marktdatenserver des zentralen Rechnersystems transferiert werden können.

Das Verfahren kann ebenso vorsehen, dass die Stammdaten in gesammelter Form von einem Stammdatenserver der Grossbank auf den Server des zentralen Rechnersystems transferiert werden können.

Weiterhin wird eine Datenverarbeitungsvorrichtung zur Durchführung des Verfahrens vorgeschlagen, die mindestens ein zentrales Rechnersystem mit Mitteln zur Speicherung von Stamm- und Marktdaten von Wertschriften aufweisen kann, so dass Stamm- und Marktdaten von Wertschriften gespeichert werden können, zu denen ein Beleihungswert ermittelt werden soll. Die Datenverarbeitungsvorrichtung kann mit mindestens einem Marktdatenserver und einem Stammdatenserver der Grossbank verbunden sein. Weiterhin weist die Datenverarbeitungsvorrichtung Mittel zur Ermittlung eines Beleihungswertes einer Wertschrift auf und ist schließlich zur Übertragung der ermittelten Beleihungswerte mit mindestens einem Rechner an einem anderen Standort sowie ggf. mit einem oder mehreren übrigen Rechnern bzw. Rechnersystemen verbunden.

Nachfolgend wird das erfindungsgemäße Verfahren anhand eines Ausführungsbeispiels und der beigefügten Zeichnung näher erläutert. Es zeigen:
- Fig. 1: Ein vereinfachtes Flussdiagramm des Datenverarbeitungsverfahrens gemäß einem Ausführungsbeispiel der Erfindung;
- Fig. 2: Ein Ablaufdiagramm eines vereinfachten Rechenmodells für Aktien und Investment Trusts;
- Fig. 3: Ein Ablaufdiagramm eines vereinfachten Rechenmodells für Obligationen, Wandelanleihen und Geldmarktanlagen;
- Fig. 4: Eine schematische Darstellung einer Datenverarbeitungsvorrichtung zur Durchführung des Datenverarbeitungsverfahrens;
- Fig. 5: Ein Ansichtsfenster für eine erste Wertschriftart (Obligation), an dem der für eine Wertschrift berechnete Beleihungswert, sowie sonstige für die Beleihungswertberechnung der Wertschrift relevante Daten angezeigt sind; und
- Fig. 6: Ein Ansichtsfenster für eine weitere Wertschriftart (Aktie), an dem der für eine weitere Wertschrift berechnete Beleihungswert, sowie sonstige für die Beleihungswertberechnung der Wertschrift relevante Daten angezeigt sind.

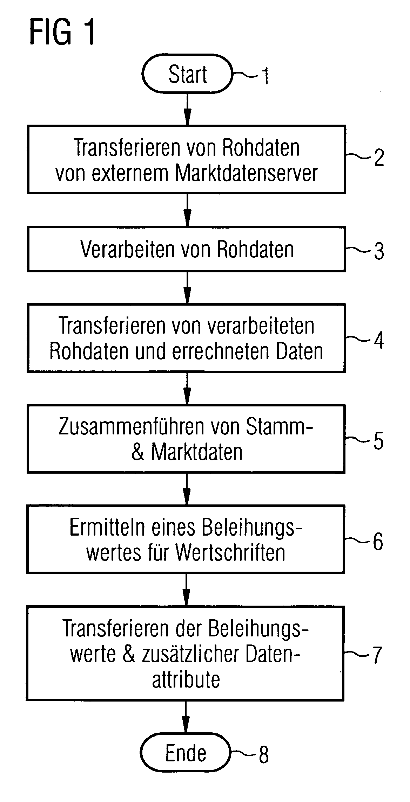

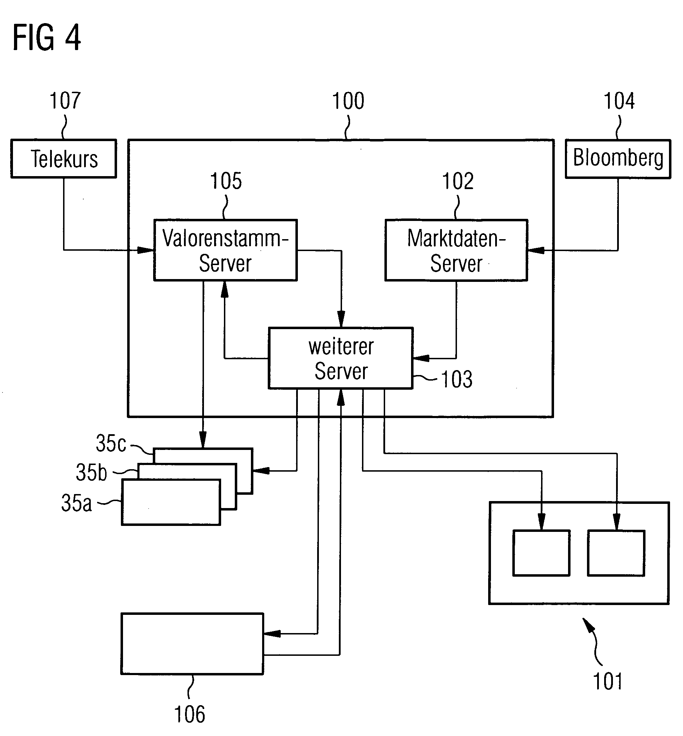

Fig. 1 zeigt ein Flussdiagramm, in dem die einzelnen Schritte des Datenverarbeitungsverfahrens schematisch dargestellt sind, wie sie typischerweise bei einer Großbank durchgeführt werden. Die Großbank betreibt weltweit Niederlassungen, denen die Beleihungswerte mitgeteilt werden sollen. Das primäre Ziel des Verfahrens ist die - einheitliche - Bereitstellung von Beleihungswerten von Wertschriften in der Zentrale sowie allen Niederlassungen der Großbank (bzw. genauer: in einem an der Zentrale vorgesehenen zentralen Rechnersystem 100, und in an den Niederlassungs-Standorten vorgesehenen Rechnern 35a, 35b, 35c (vgl. Figur 4)). Ein weiteres Ziel besteht darin, Beleihungswerte sowie zusätzliche Datenattribute von Wertschriften an übrige Rechnersysteme der Großbank zu liefern (vgl. z.B. die in Figur 4 gezeigten übrigen Rechnersysteme 101).

Die übrigen Rechnersysteme 101 können z.B. zur Quantifikation von Risiken für die Grossbank verwendet werden, wobei mit dem übrigen Rechnersystemen z.B. Kundenportfoliosimulationen durchgeführt werden können, bzw. entsprechende Kunden-Klumpenrisiko-Identifikationsverfahren, oder z.B. entsprechende Risikogrößen-Berechnungsverfahren, z.B. zur Ermittlung von "expected loss"-Daten, die zur Umsetzung entsprechender regulatorischer Rahmenbedingungen, z.B. Basel II verwendet werden können.

Ziffer 1 bezeichnet den Start des Datenverarbeitungsverfahrens. Das Verfahren wird typischerweise auf dem zentralen Rechnersystem 100 - z.B. unter Verwendung eines Valorenstamm-Servers 105, eines Marktdatenservers 102, und eines weiteren Servers 103, etc. (vgl. Figur 4, und die Darstellung unten) - an dem zentralen Sitz der Großbank durchgeführt, da dort erfahrungsgemäß ein ausreichend leistungsstarkes Rechnersystem und das entsprechende Personal zur Bedienung und Wartung des Systems vorhanden ist. Der Start 1 kann dabei auf dem ausführenden Rechnersystem automatisiert werden, indem die Programme der einzelnen Verarbeitungsschritte durch einen Scheduler-Prozess gestartet werden, der Prozesse in bestimmter Reihenfolge, zu bestimmten Zeiten und in Abhängigkeit von anderen Prozessen starten kann. Dabei ist es sinnvoll die Prozesse, welche die einzelnen Verfahrensschritte abarbeiten, zu Zeitpunkten zu starten, an denen vereinbarungsgemäß die Marktdaten verfügbar sind, so dass die Durchführung des Verfahrens möglichst schnell erfolgen kann und die ermittelten Beleihungswerte möglichst schnell verfügbar sind.

Das Verfahren geht beim Start 1 davon aus, dass Stammdaten von Wertschriften, zu denen die anschließende Datenverarbeitung stattfindet, in dem weiteren Server 103 des zentralen Rechnersystem 100 bereits gespeichert sind, so dass auf diese im Rahmen der Datenverarbeitung zugegriffen werden kann. Dementsprechend müssen die Stammdaten der Wertschriften vor der ersten Durchführung zumindest einmalig in den weiteren Server 103 des zentralen Rechnersystems 100 eingebracht werden, so dass bei der Ausführung der weiteren Verfahrensschritte auf diese zugegriffen werden kann.

Das Einbringen der Daten in den weiteren Server 103 des zentralen Rechnersystems 100 erfolgt vorteilhaft voll automatisiert über einen sogenannten Batchlauf , bei dem die Stammdaten der Wertschriften in geordneter Form in einer Datei aufgelistet sind und diese von einem Programm gelesen und in den weiteren Server 103 des zentralen Rechnersystems 100 eingebracht werden. Da erfahrungsgemäß häufig neue Wertschriften auf den Markt kommen oder gespeicherte Stammdaten obsolet werden können, wenn beispielsweise die zugehörige Wertschrift nicht mehr existiert, können die in dem weiteren Server 103 des zentralen Rechnersystems 100 gespeicherten Stammdaten auch zu späteren Zeitpunkten aktualisiert werden.

Die Stammdaten umfassen dabei neben den Kenndaten der Wertschriften, also der International Securities Identification Number (ISIN) und/oder der Valorennummer, beispielweise und u.a. die Grundbeschreibung, den Namen des Emittenten der Wertschrift, die Währung in der die Wertschrift gehandelt wird bzw. emittiert wurde, und das Domizil des Emittenten, den Coupon und das Verfalldatum der Wertschrift im Falle einer Obligation.

Weiter geht das Verfahren beim Start 1 davon aus, dass sämtliche Modellvariabeln der für die Berechnung von Beleihungswerten verwendeten Rechenmodelle sowie entsprechende Ausschlusskriterien (s.u.) in entsprechenden Steuerungstabellen erfasst wurden. Das Erfassen (und ggf. - später- das Abändern) der Variablen / Ausschlusskriterien in den Steuerungstabellen erfolgt manuell durch eine berechtigte Person (d.h. eine Person, die für das System eine "Read and Write" - Berechtigung (und nicht lediglich eine "Read"-Berechtigung) besitzt). Durch die Möglichkeit der nachträglichen Abänderung der Modellvariabeln / Ausschlusskriterien in den Steuerungstabellen kann das System / das Verfahren variabel an sich ändernde Begebenheiten angepassten werden, z.B. einen geänderten Risikoappetit der Großbank, etc.

Im zweiten Schritt 2 des Datenverarbeitungsverfahrens werden Marktdaten von Wertschriften von einem externen Marktdatenserver 104 eines Marktdatenzulieferers abgeholt und auf den Marktdatenserver 102 des zentralen Rechnersystems 100 geladen (vgl. Figur 4). Dabei handelt es sich um Rohdaten (z.B. um entsprechende Preisdaten, Rating-Daten, etc.), welche noch weiterverarbeitet werden müssen. Üblicherweise werden Marktdaten an jedem Tag erzeugt, an dem an Handelsplätzen, beispielsweise an Aktienbörsen, Wertschriften gehandelt werden. Nach dem Schließen der Handelsplätze, also beispielsweise nach Handelsschluss an den Aktienbörsen, können diese zur Abholung bereitgestellt werden.

Beim Transfer der Marktdaten (Schritt 2) kann somit ein Dateitransfer unter Benutzung von Transferprotokollen nach dem Stand der Technik von dem externen Marktdatenserver 104 zu dem Marktdatenserver 102 des zentralen Rechnersystems 100 der Großbank stattfinden. Bekannte Transferprotokolle sind beispielsweise ftp = "file transfer protocol" oder scp = "secure copy", wobei beim scp-Protokoll der Inhalt verschlüsselt übertragen wird.

Zur Erlangung der Marktdaten trifft die Großbank beispielsweise mit einem Datenzulieferer, z.B. der Fa. Bloomberg, der sich auf die Erfassung solcher Marktdaten spezialisiert hat, eine Vereinbarung, dass die Marktdaten eines Handelstages in einer Datei mit einem vereinbarten Dateiformat auf einem vereinbarten Server (hier: dem o.g. Markdatenserver des Marktdatenzulieferers 104) bereitgestellt werden. Auf dem Marktdatenserver 102 des zentralen Rechnersystems 100 wird dann am Ende eines Handelstages ein Prozess angestoßen, der diese Datei mit den Rohdaten von dem Server (hier: dem o.g. Markdatenserver des Marktdatenzulieferers 104) auf das zentrale Rechnersystem (hier: den Marktdatenserver 102 des zentralen Rechnersystems 100) - also downstream - transferiert. Alternativ hierzu könnte der Server (hier: der Markdatenserver des Marktdatenzulieferers 104) von sich aus einen entsprechenden Prozess anstoßen, und die Datei - upstream - zu dem Marktdatenserver 102 des zentralen Rechnersystems 100 transferieren. Der abgeschlossene Dateitransfer dient dann als Auslöser für die weitere Verarbeitung.

Im dritten Schritt 3 des Datenverarbeitungsverfahrens werden Marktdaten durch den Marktdatenserver 102 des zentralen Rechnersystems 100 weiterverarbeitet und somit für den vierten Schritt 4 bereitgestellt. In der Verarbeitung werden zum Beispiel die Rohdaten um durch Corporate Actions Ereignisse, z.B. Stock Splits hervorgerufene Einflüsse auf den Preis und/oder das Tageshandelsvolumen einer Wertschrift, bereinigt.

Nachdem dieses erste Verfahren abgeschlossen ist, werden verschiedene Kenngrößen für eine jeweilige Wertschrift errechnet, wie beispielweise und u.a. die Volatilität des Preises, bzw. der Preisrenditen, der Wertschrift, z.B. einer Aktie und deren durchschnittliches Tageshandelsvolumen. Dabei werden Zeitreihen mit den Schlusskursen und dem Tageshandelvolumen der Wertschrift, z.B. der Aktie über eine vorbestimmte Zeitperiode gebildet und herangezogen. Sämtliche Daten - in Rohform, sowie verarbeitet oder errechnet (z.B. auch die o.g. Daten betreffend Volatilität / durchschnittliches Tageshandelsvolumen) - werden auf der Datenbank des Marktdatenservers 102 des zentralen Rechnersystems 100 gespeichert.

Im vierten Schritt 4 des Datenverarbeitungsverfahrens werden die o.g. Wertschrift-Marktdaten - d.h. die Rohform-Daten, sowie die durch den Marktdatenserver 102 des zentralen Rechnersystems 100 verarbeiten / errechneten Daten (z.B. auch die o.g. Daten betreffend Volatilität / durchschnittliches Tageshandelsvolumen) -, und entsprechende Stammdaten von dem Marktdatenserver 102 des zentralen Rechnersystem 100 an einen weiteren Server 103 des zentralen Rechnersystems 100 transferiert (vgl. Figur 4).

Die Stamm- und Marktdaten umfassen dabei neben den Kenndaten der Wertschriften, also der International Securities Identification Number (ISIN) und/oder der Valorennummer, also beispielsweise und u.a. als Preisdaten die Schlusskurse der gehandelten Wertschriften, die Währung in der die Wertschrift gehandelt wird und weitere errechnete Werte wie die Volatilität oder das durchschnittliche Tageshandelsvolumen für Aktien, sowie beispielweise und u.a. die Schlusskurse, die Währung in der die Wertschrift emittiert wurde, den Coupon, das Domizil des Emittenten, das Verfalldatum und die Ratings für Obligationen und dazu die Konversionsprämie für Wandelanleihen.

Die Stamm- und Marktdaten können dabei in einer Datei vorliegen, deren Format auf dem zentralen Rechnersystem 100 bekannt ist und dort verarbeitet werden kann. Ein solches Format kann beispielsweise vorsehen, dass die Daten zu einer Wertschrift in einer Zeile aufgelistet sind. Eine solche Zeile kann wiederum in einzelne Datenfelder unterteilt sein, die ein fixe Länge oder alternativ eine variable Länge und ein Trennzeichen zur Trennung der Felder aufweisen.

Zusätzlich zum o.g. Markdatenserver 102 kann der weitere Server 103 für einzelne der o.g. Wertschriften, und/oder für weitere, zusätzliche Wertschriften noch entsprechende (weitere) Stamm- und Marktdaten, und/oder (weitere) z.B. Preis-Daten, z.B. die Schlusskurse der gehandelten Wertschriften für Aktien sowie die Schlusskurse und die Rating-Daten für Obligationen, etc. von einem oder mehreren zusätzlichen Rechnern erhalten, z.B. von einem von der Fa. Telekurs (bzw. einem von der Fa. Telekurs betriebenen Rechner 107) mit entsprechenden Daten belieferten zusätzlichen Rechner 105 des zentralen Rechnersystems, und/oder z.B. von einem weiteren, zusätzlichen, bank-internen Rechner 106 (z.B. von einem Rechner einer Auslandstochter der Großbank), usw.

Im fünften Schritt 5 - "Valmergeprozess" - werden die o.g. ggf. aus verschiedenen Quellen (z.B. dem o.g. Marktdatenserver, den o.g. zusätzlichen Rechnern, etc.) stammenden Daten durch den o.g. weiteren Server 103 so verarbeitet, dass für jede Wertschrift jeweils ein einziger, dieser zugeordneter, in der entsprechenden Datenbank abgespeicherter Datensatz erzeugt wird, z.B. mit jeweils einem einzigen, eindeutigen, der Wertschrift zugeordneten Volatilitätswert, mit einem einzigen, eindeutigen, der Wertschrift zugeordneten Wert für das durchschnittliche Tageshandelsvolumen, mit jeweils eindeutigen Wertschrift-Preiswerten, etc., etc. Der Valmergeprozess wird erst dann automatisch angestoßen, wenn der weitere Server 103 von sämtlichen der o.g. Quellen die jeweils entsprechende Daten-Lieferung (Stamm- und Marktdaten) vollständig erhalten hat.

Im Rahmen des Valmergeprozesses wird zunächst ermittelt, welche der von den verschiedenen Quellen gelieferten Daten jeweils identische Wertschriften betrifft. Dabei können jeweils identische Wertschriften je nach Quelle durch jeweils unterschiedliche Stammdaten gekennzeichnet sein, z.B. bei einer ersten Quelle jeweils durch die ISIN-Nr., und bei einer zweiten Quelle jeweils durch die Valoren-Nr., etc. Zur Ermittlung, welche der von den verschiedenen Quellen gelieferten Daten jeweils identische Wertschriften betrifft, kann der weitere Server z.B. eine oder mehrere entsprechende, die Zuordnung zwischen verschiedenen Stammdaten kennzeichnende Tabelle, z.B. eine ISIN-Nr.-Valoren-Nr.-Referenztabelle verwenden.

Wird ermittelt, dass für ein-und-dieselbe Wertschrift konkurrierende Daten aus verschiedenen Quellen vorhanden sind (z.B. konkurrierende Preis-Daten, konkurrierende Rating-Daten, etc.), werden mittels entsprechender Priorisierungsverfahren jeweils diejenigen Daten ausgewählt, die für die Abspeicherung des o.g. einer jeweiligen Wertschrift zugeordneten Datensatzes in der Datenbank verwendet werden sollen. Je nach Wertschriftenart, etc. können jeweils unterschiedliche Priorisierungsverfahren verwendet werden.

Beispielsweise können bei Obligationen jeweils die Daten derjenigen Quelle priorisiert, und für die Abspeicherung im o.g. Datensatz ausgewählt werden, die das jüngste Preisdatum aufweisen, d.h., am aktuellsten sind.

Bei für verschiedene Quellen - z.B. den o.g. Markdatenserver (Bloomberg), und den o.g. zusätzlichen Rechner (Telekurs), etc. - identischem Preisdatum können die Daten einer bestimmten, vorab festgelegten Quelle Default-mäßig für die Abspeicherung im o.g. Datensatz ausgewählt werden, z.B. die Daten von z.B. Bloomberg.

Für andere Arten von Daten - z.B. Rating-Daten - kann z.B. allein eine Priorisierung nach der Quelle vorgenommen werden. Beispielsweise können durch den weiteren Server 103 des zentralen Rechners 100 jeweils die Rating-Daten von Bloomberg bevorzugt für die Abspeicherung im o.g. Datensatz verwendet werden; lediglich dann, wenn keine Daten von Bloomberg vorhanden sind, kann auf von einer anderen Quelle stammende Rating-Daten zurückgegriffen werden, z.B. auf Rating-Daten von Telekurs.

Die automatische Ermittlung von Beleihungswerten für Wertschriften (Schritt 6) beginnt, sobald der Valmergeprozess (Schritt 5) abgeschlossen ist.

Für einige Arten von Wertschriften sind dazu Rechenmodelle auf dem zentralen Rechnersystem 100, insbesondere dem o.g. weiteren Server 103 hinterlegt. In einem solchen Rechenmodell ist für eine oder mehrere Arten von Wertschriften definiert, nach welchen Rechenregeln und mit welchen Parametern ein Beleihungswert von dem Rechnersystem zu ermitteln bzw. zu berechnen ist.

Für diese Arten von Wertschriften kann mittels der Rechenmodelle für jeden Tag, an dem aktuelle Marktdaten zur Verfügung stehen, ein Beleihungswert für eine Wertschrift automatisch ermittelt werden.

Die automatisch ermittelten Werte können anschließend sofort weiterverarbeitet werden, beispielsweise kann geprüft werden, ob Grenzwerte über- oder unterschritten wurden. Fällt ein Beleihungswert für eine Wertschrift unter einen vordefinierten Grenzwert, wird er zur Überprüfung in eine Wartenschlange geführt, damit der neue ermittelte Beleihungswert mit der Hilfe der vorhandenen Stamm- und Marktdaten validiert werden kann. Dieser Validationsprozess wird durch eine ausreichend qualifizierte Person ausgeführt.

Der Verfahrensschritt zur Ermittlung des für eine Wertschrift individuellen Beleihungswerts wird für jede Wertschrift, für die ein Rechenmodell gespeichert ist und zu der Marktdaten vorliegen, wiederholt.

Das Datenverarbeitungsverfahren ermöglicht auch die manuelle Eingabe von Beleihungswerten für Wertschriften, zu denen beispielsweise ein Beleihungswert nicht automatisch unter Heranziehung eines Rechenmodells ermittelt wird oder zu denen die für die automatische Ermittlung notwendigen Marktdaten aus irgendeinem Grund nicht zur Verfügung stehen.

So werden beispielsweise für sogenannte strukturierte Produkte und Hedge Fonds manuell, also durch eine ausreichend erfahrene Person, Beleihungswerte ermittelt und in das Rechnersystem eingegeben (z.B. durch eine entsprechend berechtigte Person, insbesondere eine Person, die für das Rechnersystem eine "Read and Write" - Berechtigung besitzt). Zu diesem Zweck kann eine Benützeroberfläche (GUI) des weiteren Servers 103 des zentralen Rechnersystems 100 abgerufen bzw. verwendet werden.

Nachdem ein Beleihungswert ermittelt wurde, wird dieser sowie die dazugehörenden Stamm- und Marktdaten - unter Zuordnung zur jeweiligen Wertschrift - gespeichert. Auf die so entstehende Historie eines Beleihungswertes einer Wertschrift und deren Stamm- und Marktdaten (d.h. die aktuellen, sowie ältere, historisierte, abgespeicherte Daten) kann dann jeder Zeit zurückgegriffen werden, indem durch eine entsprechend berechtigte Person, z.B. Personen, die für das Rechnersystem zumindest eine "Read" - Berechtigung besitzen (z.B. sämtliche Angestellte der Grossbank) die Historie auf die o.g. Benützeroberfläche (GUI) des weiteren Servers des zentralen Rechnersystems abgerufen werden kann.

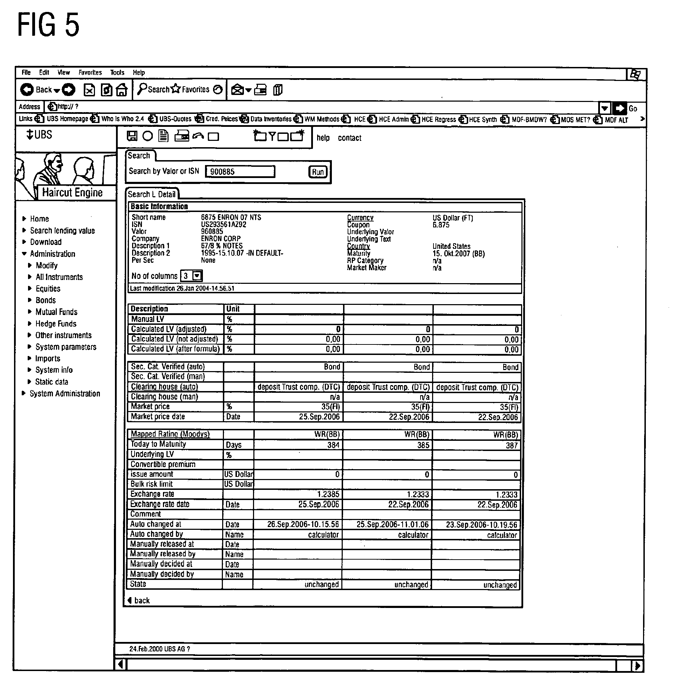

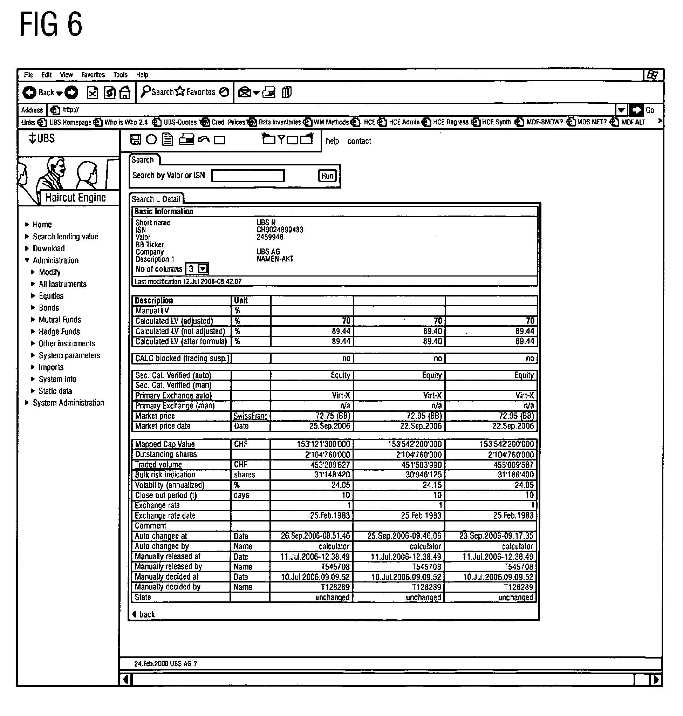

Die angezeigten Daten umfassen sämtliche für die Beleihungswertberechnung einer Wertschrift relevanten Daten; diese werden in einem je nach Wertschriftenart (zum Beispiel Aktien, Fonds, Obligationen, Wandelanleihen, Edelmetalle, etc.) individuell bzw. anders gestalteten Ansichtsfenster (View) angezeigt, damit nur die zur Wertschriftart passenden Informationen angezeigt werden. Damit kann nicht nur ein entsprechender Beleihungswert abgerufen werden, sondern auch nachvollzogen werden, basierend auf welchen Stamm- und Markdaten der jeweilige Beleihungswert berechnet wurde. Beispiele für entsprechende Ansichtsfenster sind in Figur 5 und Figur 6 gezeigt (wobei in Figur 5 ein Ansichtsfenster für die Wertschriftart "Bond", und in Figur 6 ein Ansichtsfenster für die Wertschriftart "Aktie" dargestellt ist).

Im letzten Verfahrensschritt 7 werden die ermittelten Beleihungswerte an die verschiedenen Standorte, bzw. die ermittelten Beleihungswerte und zusätzliche Datenattribute an übrige Rechnersysteme 101 der Grossbank transferiert. Dazu wird vorzugsweise eine Datei erstellt, in der die ermittelten Beleihungswerte enthalten sind. Das Format der Datei kann dabei ähnlich zu dem oben beschriebenen sein. Der Dateitransfer kann z.B. nach einem aus dem Stand der Technik bekannten ASI-Verfahren erfolgen, wobei die Datei aufgrund der Vertraulichkeit der Information vorzugsweise verschlüsselt wird.

Das Transferieren der Beleihungswerte an die verschiedenen Standorte (bzw. dort vorgesehene Rechner 35a, 35b, 35c), bzw. das Transferieren der Beleihungswerte und der zusätzlichen Datenattribute an die übrigen Rechnersysteme 101 kann vollautomatisch erfolgen, z.B. einmal täglich. Hierzu können die Beleihungswerte vom o.g. weiteren Server 103 an einen Valorenstamm-Server, z.B. den o.g. Rechner 105 geliefert, und dort abgespeichert werden, und dann mittels des o.g. Verfahrens (z.B. des ASI-Verfahrens) vom Valorenstamm-Server 105 an die entsprechenden Standort-Rechner 35a, 35b, 35c übertragen werden.

Alternativ oder zusätzlich kann - z.B. für einen Teil der Standorte, bzw. einen Teil der dort vorgesehenen Rechner 35a, 35b, 35c- auch ein teil-automatisierter Beleihungswert-Transfer erfolgen, z.B. direkt zwischen dem o.g. weiteren Server 103, und den entsprechenden Standort-Rechnern (ohne Zwischenschaltung des o.g. Valorenstamm-Servers 105). Dabei wird die o.g. - sämtliche ermittelte Beleihungswerte, z.B. mehr als 100.000 Beleihungswerte für mehr als 100.000 Wertschriften enthaltende - Datei, oder eine entsprechende Datei (bzw. eine Kopie hiervon) nach einer auf Seiten eines entsprechenden Standort-Rechners aktiv-manuell angestoßenen Anforderung vom o.g. weiteren Server 103 an den entsprechenden Standort-Rechner übertragen ("Full Download"). Der Zugriff kann über ein entsprechendes abgeschlossenes privates Netzwerk, z.B. ein Virtual Private Network (VPN-Netzwerk) der Grossbank erfolgen, unter Verwendung der URL des weiteren Servers 103 des zentralen Rechnersystems 100 im World Wide Web (WWW). Der auf diese Weise erfolgte Download muss im jeweiligen Standort-Rechner noch mittels eines entsprechenden Uploads importiert werden. Alternativ oder zusätzlich kann- für einen weiteren Teil der o.g. Standorte, bzw. einen weiteren Teil der dort vorgesehenen Rechner - über das VPN-Netzwerk statt auf sämtliche ermittelte Beleihungswerte auch nur jeweils auf eine Teilmenge der ermittelten Beleihungswerte zugegriffen werden. Vor der Durchführung eines entsprechenden aktiv angestoßenen Downloads wird dann zunächst eine sogenannte "Shopping Liste" vom jeweiligen Standort-Rechner an das zentrale Rechnersystem 100 bzw. den weiteren Server 103 gesendet, in der sämtliche Wertschriften angegeben sind, für die entsprechende Beleihungswerte übertragen werden sollen. Die Anzahl der in der Liste enthaltenen Wertschriften kann wesentlich kleiner sein, als die Anzahl an Wertschriften, für die auf die o.g. Weise Beleihungswerte ermittelt wurden (z.B. typischerweise zwischen 1.000 und 50.000).

Nach der Übermittlung der Beleihungswerte und der weiteren zusätzlichen Datenattribute ist das Ende 8 des Datenverarbeitungsverfahrens typischerweise für einen Geschäftstag erreicht.

Auf diese Weise werden an jedem Geschäftstag aktuelle Beleihungswerte ermittelt und an die Standorte der Großbank transferiert. Ebenso kann geprüft werden, ob Grenzwerte über- oder unterschritten wurden. Fällt ein Beleihungswert für eine Wertschrift unter einem vordefinierten Grenzwert und/oder fällt der sich insgesamt ergebende Gesamt-Beleihungswert eines Portfolios eines Kreditnehmers unter einen vordefinierten Grenzwert-was durch das Rechnersystem entsprechend automatisch angezeigt werden kann - , so kann die Großbank entsprechend auf die Situation reagieren, um das Kreditrisiko zu verringern. Beispielsweise kann sie den Kreditnehmer auffordern, weitere Sicherheiten zur Absicherung zu hinterlegen.

Auf diese Weise kann die Grossbank anhand der aktuellen Wertschrift-Marktdaten prüfen, ob die Wertschriften im Portfolio eines Kreditnehmers noch als Kreditsicherung ausreichen.

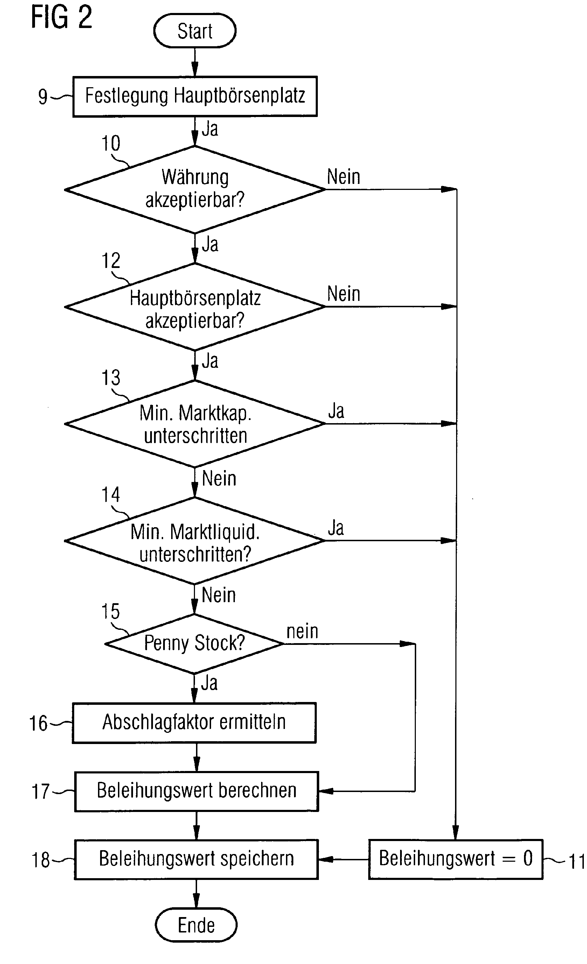

Figur 2 zeigt beispielhaft ein Ablaufdiagramm eines vereinfachten Rechenmodells, das zur automatischen Ermittlung eines Beleihungswertes für Aktien und Investment Trusts auf dem zentralen Rechnersystem 100, insbesondere dem o.g. weiteren Server 103 gespeichert ist.

Für Aktien und Investment Trusts wird im ersten Schritt 9 vom weiteren Server 103 des zentralen Rechnersystems zunächst derjenige Börsenplatz mit den höchsten Umsatzzahlen über eine bestimmte Zeitperiode (z.B. die letzten zwei Monate) als Hauptbörsenplatz festgelegt, wobei die entsprechende Information z.B. vom o.g. Valorenstamm-Server 105 bezogen werden kann. Für die weiteren Betrachtungen werden ausschließlich die Marktdaten dieses Börsenplatzes betrachtet.

Anschließend wird im nächsten Schritt 10 geprüft, ob die Wertschrift in einer annehmbaren Währung gehandelt wird. Wird eine Wertschrift beispielsweise nicht in einer akzeptierbaren Währung, die aus verschiedenen Gründen als nicht-akzeptierbar eingestuft sein kann, gehandelt (Ausschlusskriterium), so wird diese Wertschrift von der Großbank nicht beliehen. Der Wertschrift wird dementsprechend bei Vorliegen dieses Ausschlusskriteriums im Schritt 11 ein Beleihungswert von 0 zugewiesen.

Ferner wird im nächsten Schritt 12 geprüft, ob die Wertschrift an einem annehmbaren Hauptbörsenplatz gehandelt wird. Wird eine Wertschrift beispielweise nicht an einem akzeptierbaren Hauptbörsenplatz, der aus verschiedenen Gründen als nicht-akzeptierbar eingestuft sein kann, gehandelt (Ausschlusskriterium), so wird diese Wertschrift von der Großbank nicht beliehen. Der Wertschrift wird dementsprechend bei Vorliegen dieses Ausschlusskriteriums im Schritt 11 ebenfalls ein Beleihungswert von 0 zugewiesen.

Ein weiteres Ausschlusskriterium für die Beleihung einer Aktie bzw. eines Investment Trusts ist ein minimale Marktkapitalisierung des entsprechenden Unternehmens. Wird ein für die Marktkapitalisierung vordefinierter Minimalwert unterschritten, so wird die Wertschrift ebenfalls nicht beliehen. Im nächsten Schritt 13 wird daher anhand der Kursdaten und der Anzahl der existierenden Wertschriften geprüft, ob die vorgegebene minimale Marktkapitalisierung unterschritten ist. Falls die minimale Marktkapitalisierung nicht erreicht wird, so wird der Wertschrift im Schritt 11 ein dementsprechender Beleihungswert von 0 zugewiesen.

Weiterhin wird im nächsten Schritt 14 eine minimale Marktliquidität als weiteres Ausschlusskriterium herangezogen. Bleibt das durchschnittliche Tageshandelsvolumen für die zu betrachtende Aktie bzw. den Investment Trust unterhalb eines vordefinierten Minimalwertes, so wird die Aktie bzw. der Investment Trust nicht beliehen, und der Wertschrift wird im Schritt 11 der Beleihungswert 0 zugewiesen.

Im Schritt 15 wird geprüft, ob die Wertschrift zu den sogenannten "Penny Stocks" gehört, ob also der Marktpreis der Wertschrift unterhalb eines Mindestbetrags liegt. Beispielsweise können hierfür drei Werte vordefiniert sein, die jeweils bewirken, dass der zu errechnende Beleihungswert entsprechend herabgesetzt wird. In dem Fall, dass der Marktpreis unter dem ersten Wert liegt, wird der Beleihungswert um einen %-Satz (z.B. 25%) herabgesetzt. Falls er unter dem zweiten Wert liegt, wird der Beleihungswert um noch einen höheren %-Satz (z.B. 50%) herabgesetzt. Falls er unter dem dritten Wert liegt, wird der Beleihungswert um 100% herabgesetzt, was einen Beleihungswert von 0 bedeutet.

In den Schritten 10, 12, 13 und 14 werden damit Kriterien überprüft, die zu einem Ausschluss der Wertschrift von einer Beleihung führen können (Ausschlusskriterien).

Die Reihenfolge der Prüfung dieser Kriterien ist grundsätzlich beliebig, da die Kriterien nicht voneinander abhängen. Entsprechend kann die Reihenfolge der Schritte 10, 12, 13 und 14 beliebig vertauscht werden. Vorzugsweise werden jedoch die mit wenig Aufwand verbundenen Kriterien zuerst geprüft, so dass möglichst wenig Rechenleistung aufgewendet werden muss, um für eine Wertschrift festzustellen, ob diese beleihbar ist.

Ist eine Aktie oder ein Investment Trust nach den vorgenannten Kriterien grundsätzlich nicht von einer Beleihung ausgeschlossen, so wird im nächsten Schritt 17 der zahlenmäßige Beleihungswert für die Aktie bzw. den Investment Trust ermittelt. Dazu wird derjenige Volatilitäts-Wert der Wertschrift ermittelt, der mit 99%-iger Wahrscheinlichkeit innerhalb der nächsten zehn Handelstage an dem Hauptbörsenplatz erzielt werden kann ("99%-Confidence interval").

Dabei wird der Wert der Volatilität aus der Vergangenheit für eine fiktive Veräußerungszeitspanne von 10 Tagen in die Zukunft extrapoliert welcher mit 99%-iger Wahrscheinlichkeit in der Veräußerungszeitspanne im normalen Handel erzielt werden kann.

Sofern für die Wertschrift bei der "Penny Stock" Prüfung ein Abschlagswert festgesetzt wurde, so wird der Beleihungswert um diesen Faktor verringert.

Im letzten Schritt 18 wird der ermittelte Beleihungswert schließlich unter Zuordnung zur jeweiligen Wertschrift in der o.g. Datenbank gespeichert.

Wie bereits oben erwähnt, können von einer jeweils berechtigten Person die o.g. Modellvariabeln und/oder Ausschlusskriterien und/oder Rechenmodelle über entsprechende Steuerungstabellen entsprechend angepasst /geändert werden (sodass statt der o.g. Ausschlusskriterien z.B. auch entsprechend andere oder anders definierte Ausschlusskriterien verwendet werden können, und/oder statt der o.g. Variablen entsprechend andere Variablen, z.B. statt des o.g. 99%-confidence interval ein entsprechend anderes confidence interval, statt der o.g. Veräußerungszeitspanne von 10 Tagen z.B. auch eine unterschiedlich lange Veräußerungszeitspanne, andere akzeptierbare Währungen, andere akzeptierbare Börsenplätze, andere minimale Marktkapitalisierungen, andere minimale Tageshandelvolumina, andere Penny-Stock-Grenzen, andere Penny-Stock-Beleihungswert-Herabsetzungsfaktoren, etc., etc.).

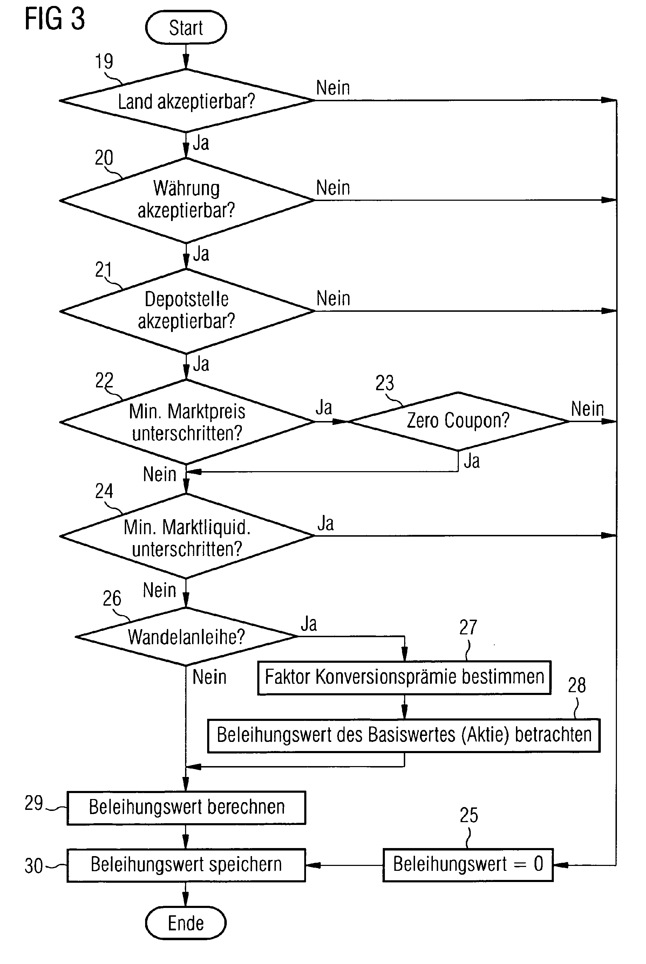

Figur 3 zeigt ein Schema eines Rechenmodells, welches zur automatischen Ermittlung von Beleihungswerten für Obligationen, Geldmarktanlagen und Wandelanleihen herangezogen wird.

Ähnlich wie bei dem Rechenmodell für Aktien bzw. Investment Trusts werden für diese Wertschriftenarten zunächst einige Ausschlusskriterien geprüft. Ist mindestens ein Kriterium nicht erfüllt, so wird die entsprechende Wertschrift nicht beliehen. Der Beleihungswert wird dementsprechend auf 0 festgelegt.

Im ersten Schritt 19 wird geprüft, ob der Emittent der Wertschrift seinen Stammsitz in einem Land hat, welches für die Großbank akzeptierbar ist.

Ebenso wird in den Schritten 20 und 21 geprüft, ob die Wertschrift eine von der Großbank akzeptierte Währung zugrunde liegt und ob die die Wertschrift verwaltende Depotstelle akzeptiert wird.

Ist eines dieser in Schritt 19, 20, 21 überprüften Ausschlusskriterien nicht erfüllt, so wird die Wertschrift nicht beliehen und der Beleihungswert wird auf 0 gesetzt, Schritt 25.

Weiterhin darf die hier zu prüfende Wertschrift einen festgelegten minimalen Marktpreis nicht unterschreiten (Schritt 22). ist dies der Fall, so wird die Wertschrift nicht beliehen und der Beleihungswert wird auf 0 gesetzt, Schritt 25, es sei denn, es handelt sich um Obligationen, die ein Nuller-Coupon (Zero-Coupon) aufweisen, was in Schritt 23 abgefragt wird.

Des weiteren muss die Wertschrift mit einer minimalen Marktliquidität gehandelt werden, Schritt 24. Ist dieses Kriterium nicht erfüllt (Ausschlusskriterium), so wird die Wertschrift ebenfalls nicht beliehen und der Beleihungswert wird auf 0 gesetzt, Schritt 25.

Ebenso wie für das Rechenmodell für Aktien und Investment Trusts ist die Reihenfolge bei der Prüfung dieser Ausschlusskriterien beliebig, jedoch vorzugsweise so, dass weniger aufwändige Prüfungen zuerst durchgeführt werden.

Für Wandelanleihen, die in Aktien konvertiert werden können, wird weiterhin in Schritt 27 berücksichtigt, ob diese "im Geld" oder "außer Geld" sind, so dass für eine in Aktien konvertierbare Wandelanleihe, für die die Wahrscheinlichkeit einer Konversion als gering einzustufen ist, aufgrund des geringeren Risikos ein höherer Beleihungswert festzusetzen ist. Umgekehrt wird für konvertierbare Wandelanleihen, für die die Wahrscheinlichkeit einer Konversion in Aktien hoch ist und die damit ähnlich wie eine Aktie selbst zu betrachten ist, ein geringerer Beleihungswert ermittelt. Im Schritt 27 wird entsprechend ein in die spätere zahlenmäßige Berechnung einfließender, für die o.g. Fälle jeweils unterschiedlicher Faktor bestimmt. In beiden Fällen wird dazu auch die Höhe des Beleihungswertes des Basiswertes, also der Aktie, herangezogen, um den Beleihungswert der Wandelanleihe zu berechnen, Schritt 28.

Ist nach diesen Kriterien eine derartige Wertschrift grundsätzlich beleihbar, so wird in Schritt 29 für die zahlenmäßige Ermittlung des Beleihungswertes die Volatilität der Wertschrift herangezogen. Diese berücksichtigt die Zinskurvensensitivität, die Volatilität der credit spreads und die Wahrscheinlichkeit einer Herabstufung eines Ratings, wobei nur Ratings bestimmter Agenturen, beispielsweise Standard & Poors sowie Moody's, berücksichtigt werden. Diese Volatilität wird - analog zu der Ermittlung für Aktien - für eine fiktive Veräußerungszeit von 10 Tagen, welche mit einer 99%-iger Wahrscheinlichkeit im normalen Handel erzielt werden kann, berechnet, d.h. es wird derjenige Volatilitäts-Wert der Wertschrift ermittelt, der mit 99%-iger Wahrscheinlichkeit innerhalb der nächsten zehn Handelstage an dem Markt erzielt werden kann ("99%-Confidence Interval"). Dabei kann ein. Markt sowohl ein Börsenplatz als auch ein unregulierter Handelsplatz oder sogenannter "Over-the-Counter" (OTC) Markt sein.

Im letzten Schritt 30 wird der Beleihungswert zu der Wertschrift gespeichert.

Ein ähnliches Rechenmodell ist für die automatische Berechnung von Beleihungswerten für Anlagefonds vorgesehen.

Als Ausschlusskriterien werden in diesem Rechenmodell geprüft, ob der Anlagefonds in einem von der Grossbank akzeptierten Land aufgelegt wurde, ob die Währung, in der der Anlagefonds aufgelegt ist, akzeptierbar ist, ob eine minimale Fondsgröße nicht unterschritten wird und ob eine minimale Marktliquidität, bzw. Rücknahmefrequenz, nicht unterschritten wird.

Weiterhin wird bewertet, welche Strategie dem Fonds zugrunde liegt. So erzielen beispielsweise Geldmarktfonds einen höheren Beleihungswert als Anlagefonds, denen eine Aktienstrategie zugrunde liegt.

Für die zahlenmäßige Berechnung des Beleihungswerts wird auch hier der Wert der Volatilität aus der Vergangenheit für einen fiktiven Verkaufszeitraum von 10 Tagen extrapoliert, wobei die Volatilität mit einem Korrekturwert Alpha, welcher zwischen einem Wert von 1 und 4.29 liegt, angepasst bzw. multipliziert wird. Die somit ermittelte Volatilität entspricht einer 99%-iger Wahrscheinlichkeit, dass diese innerhalb der nächsten zehn Handelstage an dem Markt erzielt werden kann. Dabei kann der Markt sowohl ein Börsenplatz als auch der Anlagefond selber sein. Letzterer ist in der Regel gemäss Anlagefondsgesetz seines Herkunftlandes verflichtet, seine Anteile innert der im Verkaufsprospekt vorgeschriebenen Frist und zum aktuellen Inventarwert zurückzunehmen, wenn eine solche Rücknahme vom Anleger erwünscht ist.

Ähnlich wie oben unter Bezug auf das für Aktien und Investment Trusts verwendete Rechenmodell erläutert können auch bei den für Obligationen, Geldmarktanlagen und Wandelanleihen bzw. für Anlagefonds verwendeten Rechenmodellen von einer jeweils berechtigten Person die o.g. Modellvariabeln und/oder Ausschlusskriterien etc. über entsprechende Steuerungstabel len entsprechend angepasst / geändert werden (sodass statt der o.g. Ausschlusskriterien z.B. auch entsprechend andere oder anders definierte Ausschlusskriterien verwendet werden können, und/oder statt der o.g. Variablen entsprechend andere Variablen, z.B. statt des o.g. 99%-confidence interval ein entsprechend anderes confidence interval, statt der o.g. Veräußerungszeitspanne von 10 Tagen z.B. auch eine unterschiedlich lange Veräußerungszeitspanne, andere akzeptierbare Länder, andere akzeptierbare Währungen, etc., etc.).

Ein erheblich einfacheres Rechenmodell ist für die automatische Ermittlung von Beleihungswerten für Edelmetalle, also beispielsweise Gold, Silber, Platin und Palladium, sowie für Geldhinterlegungen vorgesehen.

Als Ausschlusskriterien wird hier nur geprüft, ob des sich um ein von der Großbank akzeptierbares Edelmetall bzw. um eine akzeptierbare Währung und eine akzeptierbare Gegenpartei, bei welcher die Geldanlage platziert wird, handelt.

Für die Berechnung eines Beleihungswertes der Höhe nach werden jedoch keine Marktdaten berücksichtigt, sondern es werden über festgelegte Faktoren zu den einzelnen Mengen der Edelmetalle oder der Geldhinterlegungen die Beleihungswerte ermittelt.

Eine automatische Ermittlung eines Beleihungswertes findet schließlich noch für Double Currency Units, sogenannte DOCUs, statt, bei denen es sich um eine Festgeldanlage in einer Basiswährung handelt, die in einer Gegenwährung zurückgezahlt werden. Diese Produkte weisen eine feste Laufzeit auf und setzen auf das Kursrisiko zwischen zwei Währungen.

Als Ausschlusskriterien werden zum einen die Währungen geprüft, d.h., ob es sich bei der jeweiligen Währung um eine akzeptierbare Währungen handelt. Zum anderen wird geprüft, ob die Restlaufzeit unterhalb eines Maximalwerts liegt.

Für die Berechnung des Beleihungswertes wird hier die Volatilität des Kursverhältnisses zwischen den beiden Währungen herangezogen, die für einen fiktiven Verkaufszeitraum extrapoliert wird, wobei als Verkaufszeitraum hier die Restlaufzeit des Produkts angesetzt wird. Die dazu ermittelte Volatilität entspricht einer 99%-iger Wahrscheinlichkeit, dass diese innerhalb des Verkaufzeitraums an dem entsprechenden Handelsplatz erzielt werden kann.

Für sonstige strukturierte Produkte, die üblicherweise an Aktien oder einen Index gebunden sind, sowie für Hedge Fonds ist kein Rechenmodell zur automatischen Ermittlung eines Beleihungswertes in dem zentralen Rechnersystem hinterlegt. Für diese wird stattdessen manuell ermittelt, ob diese Wertschriften beliehen werden können und gegebenenfalls mit welchem Beleihungswert.

Bei der Ermittlung von Beleihungswerten für diese strukturierten Produkte werden unter anderem die Kreditwürdigkeit des Emittenten, sowie die zugrunde liegende Währung betrachtet. Ferner werden die zugrunde liegende Strategie, die Qualität des Basiswertes, sowie die Liquidität und Schutzmechanismen bewertet.

Für Hedge Fonds werden beispielsweise die Fondsgröße, die Einlösefrequenz und damit die Liquidität sowie weitere Charakteristika bewertet.

Der so für diese Produkte manuell ermittelte Beleihungswert wird dann - ebenfalls manuell - eingegeben und zu der Wertschrift gespeichert und steht damit ebenso wie die unter Heranziehung eines Rechenmodells automatisch ermittelten Beleihungswerte zur weiteren Verarbeitung auf dem zentralen Rechnersystem zur Verfügung.

Figur 4 zeigt ein vereinfachtes Schema einer Datenverarbeitungsvorrichtung zur Ausführung des oben erläuterten Datenverarbeitungsverfahrens.

Wie bereits oben erläutert wird zur Durchführung des Verfahrens das o.g. zentrale Rechnersystem 100 einer Großbank verwendet, welches u.a. mit dem o.g. Markdatenserver 104 der Fa. Bloomberg, und dem o.g. Telekurs-Rechner 107 verbunden werden kann, sowie mit den an den Niederlassungs-Standorten vorgesehenen Rechnern 35a, 35b, 35c, und den o.g. - z.B. zur Qualifikation von Risiken verwendeten - übrigen Rechnersystemen 101, sowie mit einer Vielzahl weiterer Rechner, z.B. dem o.g. Rechner 106 einer Auslandstochter der Großbank.

Das zentrale Rechnersystem 100 umfasst mehrere geeignete Speichermittel zum Speichern der Rechnerprogramme, in welchen das Datenverarbeitungsverfahren abgebildet ist, und mehrere zentrale Recheneinheiten, sogenannte Central Processing Unit CPU, zur Ausführung der Rechnerprogramme, wobei die Speichermittel und die CPUs z.B. jeweils auf dem o.g. Markdatenserver 102, dem o.g. weiteren Server 103, und dem o.g. Valorenstamm-Server 105 vorgesehen sein können.

Das Datenverarbeitungsverfahren und die Datenverarbeitungsvorrichtung ermöglichen damit basierend auf aktuellen Marktdaten die Ermittlung von Beleihungswerten für Wertschriften, an denen in den Niederlassungen der Großbank ein Interesse besteht, in der Zentralstelle der Großbank nach definierten Rechenmodellen. Die ermittelten Beleihungswerte werden anschließend an die Niederlassungen verteilt, so dass innerhalb der Großbank die Beleihungswerte für Wertschriften konsistent und gleich sind.

## Patentansprüche

1. Datenverarbeitungsverfahren
zur automatischen Bereitstellung von Daten auf Rechnern an verschiedenen Standorten, wobei die Daten Beleihungswerte für marktfähige Wertschriften sind, mit mindestens folgenden Verfahrensschritten:
a. automatisiertes Transferieren von Marktdaten von Wertschriften auf ein zentrales Rechnersystem;
b. Ermitteln eines Beleihungswertes für jede der Wertschriften, für die Marktdaten transferiert wurden, wobei zur Ermittlung des Beleihungswertes einer Wertschrift die auf das zentrale Rechnersystem zu dieser Wertschrift transferierten Marktdaten herangezogen werden;
c. Transferieren der ermittelten Beleihungswerte der Wertschriften von dem zentralen Rechnersystem auf die Rechner an den verschiedenen Standorten.

2. Verfahren nach Anspruch 1, welches zusätzlich den Schritt aufweist:
automatisiertes Transferieren von Markt- bzw. weiteren Markt- und von Stammdaten von Wertschriften auf einen weiteren Server des zentralen Rechnersystems.

3. Verfahren nach Anspruch 1 oder 2, welches zusätzlich den Schritt aufweist:
Anzeigen eines jeweils ermittelten Beleihungswerts und der dazugehörenden Markt- und/oder weiteren Markt- und/oder Stammdaten einer Wertschrift in einem individuell gestalteten Anzeigefenster.

4. Verfahren nach einem der vorhergehenden Ansprüche, wobei das Transferieren der ermittelten Beleihungswerte der Wertschriften von dem zentralen Rechnersystem auf die Rechner an den verschiedenen Standorten voll automatisiert erfolgt.

5. Verfahren nach einem der Ansprüche 1 bis 3, wobei das Transferieren der ermittelten Beleihungswerte der Wertschriften von dem zentralen Rechnersystem auf die Rechner an den verschiedenen Standorten mittels eines Full-Download- oder eines Shopping-Liste-Verfahrens erfolgt.

6. Verfahren nach einem der vorhergehenden Ansprüche, wobei zur Ermittlung des Beleihungswertes bestimmter Wertschriftenarten ein für die jeweilige Wertschriftenart auf dem zentralen Rechnersystem gespeichertes Rechenmodell zur automatischen Berechnung des Beleihungswertes verwendet wird.

7. Verfahren nach Anspruch 6, wobei das Rechenmodell und/oder das Rechenmodell charakterisierende Variablen änderbar sind.

8. Verfahren nach einem der vorstehenden Ansprüche, wobei die Markdaten in Form von Rohdaten an das zentrale Rechnersystem transferiert werden, und zur Ermittlung der Beleihungswerte aus den Rohdaten errechnete Daten verwendet werden.

9. Verfahren nach einem der vorstehenden Ansprüche, wobei mindestens von einer ersten und einer zweiten, verschiedenen Quelle Markt- und/oder Stammdaten von Wertschriften auf das zentrale Rechnersystem bzw. auf den weiteren Server des zentrale Rechnersystems transferiert werden, und das Verfahren außerdem den Schritt aufweist:
- Ermitteln, ob jeweils die von der ersten oder der zweiten Quelle transferierten Daten zur Ermittlung eines Beleihungswerts verwendet werden sollen.

10. Verfahren nach Anspruch 9, welches außerdem die Schritte aufweist: Ermitteln, ob für ein-und-dieselbe Wertschrift konkurrierende Daten von verschiedenen Quellen vorhanden sind, und Verwenden eines Priorisierungsverfahrens zur Auswahl der Daten, die für die Abspeicherung in einer Datenbank bzw. die Ermittlung des Beleihungswerts der Wertschrift verwendet werden sollen.

11. Datenverarbeitungsverfahren nach einem der vorstehenden Ansprüche, wobei das Verfahren an jedem Tag, an dem neue Marktdaten verfügbar sind, ausgeführt wird.

12. Datenverarbeitungsverfahren nach einem der vorstehenden Ansprüche, wobei jeder ermittelte Beleihungswert und/oder dazugehörende Markt- und/oder Stammdaten dauerhaft auf dem zentralen Rechnersystem bzw. dem weiteren Server des zentralen Rechnersystems gespeichert werden.

13. Datenverarbeitungsverfahren nach einem der vorstehenden Ansprüche, wobei für Wertschriften, für die ein Beleihungswert nicht ermittelbar ist, nach der Durchführung des Verfahrens ein Beleihungswert manuell eingebbar ist.

14. Datenverarbeitungsverfahren nach einem der vorstehenden Ansprüche, wobei für Wertschriften, für die Markt- und/oder Stammdaten einen offensichtlichen Fehler aufweisen, automatisch eingelesene Datenattribute manuell überschrieben werden können.

15. Datenverarbeitungsverfahren nach Anspruch 13 oder 14, wobei das Verfahren basierend auf einer Massenmutation auf dem weiteren Server des zentralen Rechnersystems erfolgen kann.

16. Datenverarbeitungsverfahren nach einem der Ansprüche 6 bis 15, wobei in dem Rechenmodell mindestens ein Ausschlusskriterium vorgesehen ist, bei dessen Erfüllung für eine Wertschrift ein Beleihungswert ermittelt wird, der angibt, dass die Wertschrift nicht beliehen wird.

17. Datenverarbeitungsverfahren nach einem der vorstehenden Ansprüche, wobei die Ermittlung des Beleihungswertes einer Wertschrift auf der für eine fiktive Zeitspanne extrapolierten Volatilität des Marktpreises basiert.

18. Verfahren nach einem der vorstehenden Ansprüche, wobei die beim Verfahren bereitgestellten Daten Beleihungswerte und zusätzliche Datenattribute für Wertschriften sind, und/oder das Verfahren zusätzlich den Schritt aufweist: Transferieren der zusätzlichen Datenattribute an weitere Rechnersysteme.

19. Vorrichtung zur Datenverarbeitung mit mindestens einem zentralen Rechnersystem, das Mittel zur Speicherung von Kenndaten von Wertschriften aufweist, wobei die Vorrichtung zur Übertragung von Marktdaten der Wertschriften mit mindestens einem externen Rechner eines Marktdatenzulieferers verbindbar ist, und Mittel zur Ermittlung eines Beleihungswertes einer Wertschrift basierend auf den Markdaten aufweist, und zur Übertragung des ermittelten Beleihungswerts mit mindestens einem Rechner an einem anderen Standort verbindbar ist.

20. Vorrichtung zur Datenverarbeitung nach Anspruch 19, wobei die Vorrichtung Mittel zur Archivierung des ermittelten Beleihungswerts aufweist.

21. Vorrichtung zur Datenverarbeitung nach Anspruch 19 oder 20, wobei die Markdaten in Form von Rohdaten übertragen werden, und die Vorrichtung Mittel aufweist zum Weiterverarbeiten der Rohdaten zu weiterverarbeiteten Daten, wobei basierend auf den weiterverarbeiteten Daten der Beleihungswert ermittelt wird.

22. Computer-Programm mit Programm-Code-Mitteln zum Durchführen der in einem der Ansprüche 1-18 angegebenen Verfahrensschritte, wenn das Programm auf einem Computer ausgeführt wird.

23. Computer-Programm mit Programm-Code-Mitteln nach Anspruch 22, welches auf einem computerlesbaren Speichermedium gespeichert ist.
